# EUROPÄISCHE PATENTSCHRIFT

(11) **EP 0 636 220 B1**
(45) Veröffentlichungstag und Bekanntmachung des Hinweises auf die Patenterteilung: **24.07.1996**
(21) Anmeldenummer: 93907789.7
(22) Anmeldetag: 06.04.1993
(51) Int. Cl.: F16D 65/56, F16D 65/16, F16D 55/226

(54) **DRUCKLUFTBETÄTIGTE SCHEIBENBREMSE**
PNEUMATICALLY OPERATED DISC BRAKE
FREIN A DISQUE A AIR COMPRIME

(30) Priorität: 13.04.1992 DE 4212406
(43) Veröffentlichungstag der Anmeldung: 01.02.1995
(73) Patentinhaber: KNORR-BREMSE SYSTEME FÜR NUTZFAHRZEUGE GmbH, 80809 München (DE)
(72) Erfinder: BAUMGARTNER, Hans, D-8052 Moosburg (DE); TRIMPE, Robert, D-8000 München 50 (DE); BIEKER, Dieter, D-8000 München 82 (DE); SCHULLERUS, Otto, D-8000 München 40 (DE)
(74) Vertreter: KUHNEN, WACKER & PARTNER
(86) Internationale Anmeldenummer: DE9300324
(87) Internationale Veröffentlichungsnummer: WO9321456

(56) Entgegenhaltungen:
- DE-A- 3 716 202
- DE-A- 4 032 885

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der **DE-OS 37 16 202** sowie aus der nicht vorveröffentlichten **DE-OS 40 32 885** bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellsgindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Um das Lüftspiel, d.h. den Abstand der Bremsbacken zur Bremsscheibe im unbetätigten Zustand unter Ausgleich der sich durch Abrieb ändernden Belagstärke konstant zu halten, ist eine Nachstelleinrichtung vorgesehen, die mit der Stellspindel drehfest gekoppelt ist und bei jeder Betätigung des Drehhebels die Stellspindel dann um einen bestimmten Winkel dreht, wenn die Bremsbacke nach Überwindung des Soll-Lüftspiels noch nicht an der Bremsscheibe anliegt.

Wenn der Bremsbelag durch Verschleiß weitgehend abgenutzt ist, ist zur Vermeidung eines Bremsenausfalls ein neuer Bremsbelag einzusetzen, wozu der Wartungstechniker die Stellspindel wieder in ihre Ausgangslage zurÜckbringen Muß, um ausreichend Platz für den neuen Bremsbelag zu schaffen. Um diesen Rückstellvorgang möglichst einfach zu gestalten, ist die Nachstelleinrichtung mit einer extern betätigbaren Drehantriebseinrichtung, beispielsweise in Form eines Sechskant-Drehkopfs, gekoppelt, die mittels eines geeigneten Steckschlüssels ein entsprechendes Drehen der Nachstelleinrichtung (und damit der mit dieser gekoppelten Stellspindel) entgegen der Nachstellrichtung ermöglicht, so daß die Stellspindel wieder in ihre Ausgangslage zurückgebracht werden kann. Diese Ausgangslage ist bei bekannten Zuspannvorrichtungen ggf. durch einen axialen Anschlag definiert, der die axiale Bewegung der Stellspindel an einer vorgegebenen Stelle begrenzt.

Um sicherzustellen, daß sich die Stellspindel beim Bremsvorgang, d.h. im zugespannten Zustand, infolge der hierbei auftretenden enorm hohen Druckkräfte nicht von der Bremsscheibe wegbewegt und damit den Bremsvorgang unterbricht, ist das meist mehrgängige Außengewinde der Stellspindel mit einer solchen Steigung versehen, daß in dieser Richtung eine Selbsthemmung vorliegt. Infolgedessen kann bei dem vorstehend erläuterten Rückstellvorgang bereits ein geringfügig zu großes Drehmoment dazu führen, daß über den axialen Anschlag auf die Stellspindel eine solch hohe axiale Kraft ausgeübt wird, daß das Außengewinde der Stellspindel im Innengewinde der Traverse gleichsam "festgezogen" wird. Die Stellspindel ist dadurch in der Ausgangslage u.U. so stark festgeklemmt, daß die Nachstelleinrichtung nicht in der Lage ist, diese Klemmkraft zu überwinden; wenn der Wartungstechniker die Verklemmung der Stellspindel jedoch nicht bemerkt, ist die Bremse nicht funktionsfähig.

Der Erfindung liegt die Aufgabe zugrunde, eine druckluftbetätigte Scheibenbremse gemäß dem Oberbegriff des Anspruchs 1 derart weiterzubilden, daß ein durch eine unsachgemäße Durchführung des Belagwechsels bedingte Funktionsunfähigkeit der Bremse weitgehend vermieden werden kann.

Diese Aufgabe wird erfindungsgemäß mit den im Kennzeichnungsteil des Anspruchs 1 angegebenen Maßnahmen gelöst.

Erfindungsgemäß ist demzufolge ein Anschlag vorgesehen, der in der Ausgangslage der Stellspindel im wesentlichen in Umfangswirkung auf diese einwirkt; somit wird eine die Drehbewegung der Stellspindel hemmende Stützkraft aufgebracht. Hierdurch wird erreicht, daß auch bei Ausüben eines zu hohen Drehmoments beim Rückstellen der Stellspindel im wesentlichen keine Axialkräfte auf die Gewindeflächen ausgeübt werden; eine Verklemmung des Gewindes kann daher sicher verhindert werden, so daß die Funktionstüchtigkeit der Bremse weiterhin gewährleistet ist.

Gemäß Anspruch 2 kann der erfindungsgemäße, in Umfangsrichtung wirksame Anschlag auf einfache Weise gebildet werden, indem ein Ende der Stellspindel in Rückdrehrichtung mit einem drehfesten Anschlagkörper zusammenwirkt, der außermittig an der Stellspindel angreift und die die Drehbewegung der Stellspindel hemmende Stützkraft im wesentlichen parallel zur Radialebene aufbringt. Ebenso ist es gemäß Anspruch 3 möglich, an einem Ende der Stellspindel mindestens eine außermittig angeordnete Anschlagfläche auszubilden, die im wesentlichen in Radialrichtung unter einem vorgegebenen, vorzugsweise 90 Grad betragenden Winkel zur Radialebene verläuft und mit einem drehfesten Anschlagkörper in Eingriff gerät. In beiden Fällen läßt sich die Stellspindel ohne Erzeugung einer nennenswerten Axialkomponente in ihrer Ausgangslage stoppen.

Obgleich der erfindungsgemäße Umfangsanschlag gemäß Anspruch 5 aus fertigungstechnischen wie auch aus Platzgründen vorzugsweise am bremsscheibenabgewandten Ende der Stellspindel ausgebildet wird, ist es je nach Geometrie der Stellspindel und der sie umgebenden Elemente selbstverständlich auch möglich, den Anschlag am bremsscheibenseitigen Ende oder in einer gewissen Entfernung zu einem der beiden Enden vorzusehen.

Bei Verwendung einer zweispindeligen Zuspannvorrichtung, bei der beide Stellspindeln über eine Synchronisationseinrichtung miteinander drehfest gekoppelt sind, ist es selbstverständlich ausreichend, wenn lediglich ein einziger, auf eine der beiden Stellspindels einwirkender Umfangsanschlag vorgesehen wird.

Die wesentlichen Merkmale der bevorzugten Ausführüngsformen des erfindungsgemäßen Umfangsanschlags sind Gegenstand der Unteransprüche 6 bis 14.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung;
**Fig. 2** einen Längsschnitt der in Fig. 1 gezeigten Zuspannvorrichtung; und
**Fig. 3** anhand eines vergrößertes Teilquerschnitts der Fig.2 eine erste Ausführungsform des Umfangsanschlags;
**Fig. 4A, 4B, 5A, 5B, 6 und 7** vier Varianten einer zweiten Auaführungsform des umfangsanschlags; und
**Fig. 8, 9 und 10A bis 10E** drei Varianten einer dritten Ausführungsform des Umfangsanschlags.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

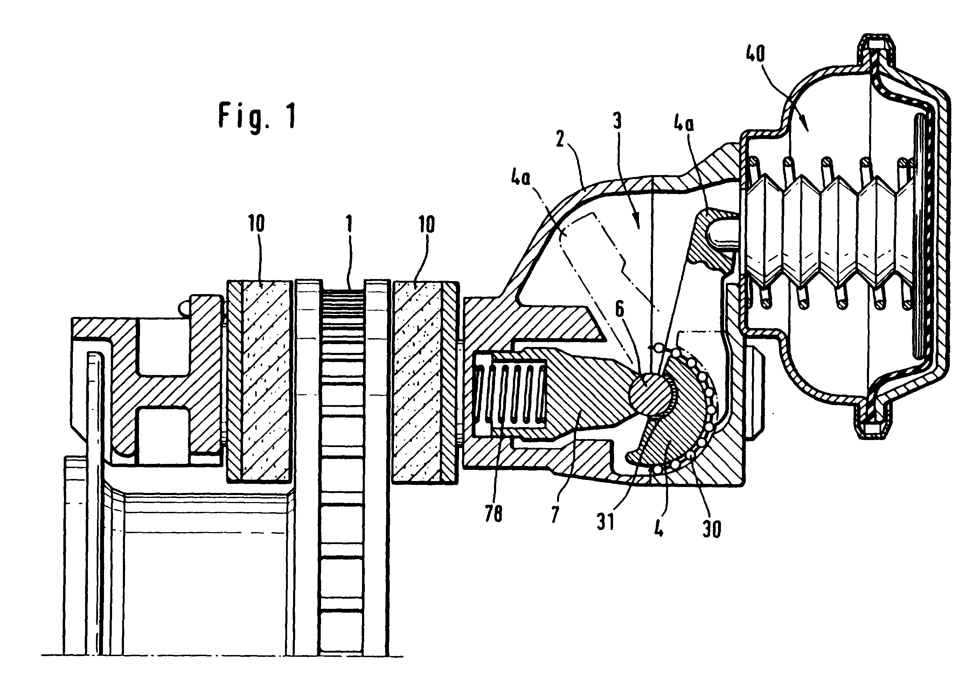

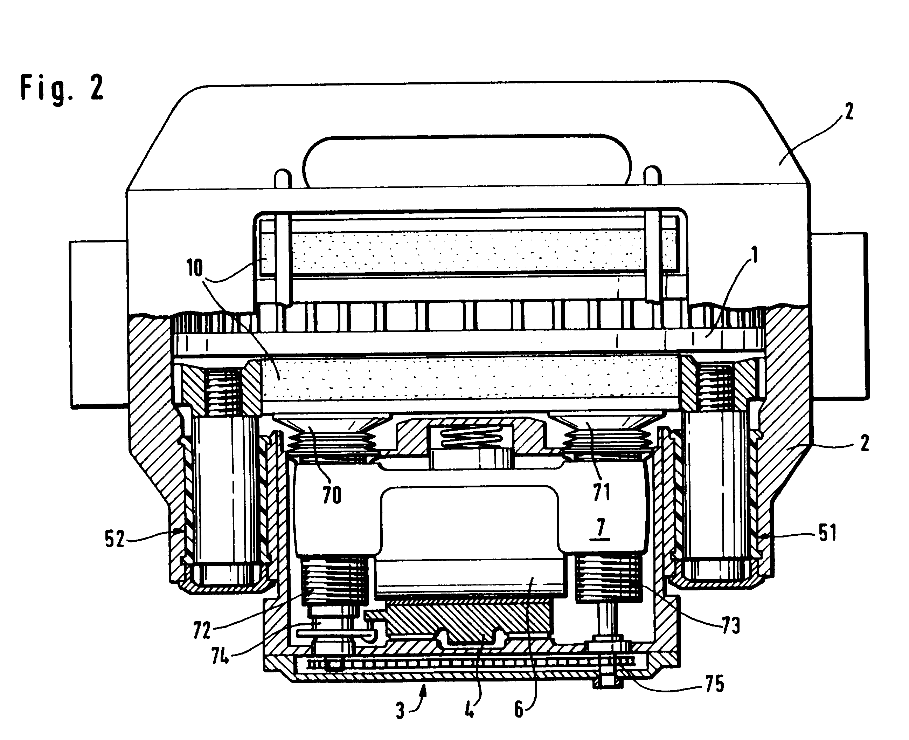

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichs lagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere dem Längsschnitt der Fig. 2 entnehmbar ist, weist die Traverse 7 an beiden Seiten jeweils eine mit einem (mehrgängigen) Innengewinde versehene Bohrung auf, in der jeweils eine Stellspindel 72 bzw. 73 justierbar verschraubt ist, deren (mehrgängiges) Außengewinde in dem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Mitnehmerwelle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Die Nachstelleinrichtung 74 weist an ihrem oberen, d.h. bremsscheibenabgewandten Ende einen nicht näher gezeigten Drehkopf in Form eines Sechskants auf; durch Drehen dieses Sechskants in Gegen-Zuspannrichtung können die Stellspindel 72 und damit ebenso die drehfest gekoppelte Stellspindel 73 in ihre jeweilige Ausgangslage zurückbewegt werden, so daß eine neue Bremsbacke 10 eingebaut werden kann. Dieser Sechskant-Drehkopf kann auch am bremsscheibenabgewandten Ende der mit der Nachstelleinrichtung 74 über die Synchronisationseinrichtung 75 drehfest gekoppelten Nitnehmerwelle vorgesehen sein.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm pro Bremsbacke beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Um sicherzustellen, aaß sich die Stellspindeln infolge der hierbei auftretenden enorm hohen Druckkräfte nicht wieder von der Bremsscheibe 1 wegbewegen und damit den Bremsvorgang unterbrechen, weist das Außengewinde der Stellspindeln 72 und 73 eine solche Steigung auf, daß in Gegendruckrichtung eine Selbsthemmung auftritt.

Falls ein zu großes Lüftspiel vorliegt, was beispielsweise bei zunehmendem Verschleiß der Bremsbacken 10 der Fall ist, sorgt die Nachstelleinrichtung 74 dafür, daß sich die Stellspindeln 72 und 73 solange drehen, bis das Lüftspiel seinen Sollwert erreicht. Auf diese Weise ist gewährleistet, daß die Scheibenbremse bis zum vollständigen Abrieb der Bremsbacken 10 funktionsfähig bleibt.

Bei weitgehendem Verschleiß der Bremsbeläge der Bremsbacken 10 muß von einem Wartungstechniker ein Belagwechsel vorgenommen werden. Hierzu werden die Stellspindeln 72 und 73 mittels des Sechskant-Drehkopfs wieder in ihre Ausgangslage zurückgebracht, so daß ausreichend Raum für entsprechend dicke fabrikneue Bremsbeläge vorhanden ist. Die entsprechende Drehbewegung der Stellspindeln 72 und 73 entgegen der Nachstellrichtung wird erfindungsgemäß von einem lediglich in Umfangsrichtung wirkenden Anschlag dann beendet, wenn die Stellspindeln eine vorgegebene Ausgangslage bzw. Endposition erreicht haben. Dadurch, daß der erfindungsgemäße Anschlag lediglich in Umfangsrichtung wirkt, wird erreicht, daß die Bewegung der Stellspindeln beendet wird, ohne daß auf sie eine nennenswerte axiale Kraft ausgeübt wird. Hierdurch wird sicher verhindert, daß die Stellspindeln in der genannten Endposition festklemmen. Somit ist die Nachstelleinrichtung 74 nach Beendigung der Wartungsarbeiten bei der ersten Betätigung der Zuspannvorrichtung 2 ohne weiteres in der Lage, die Stellspindeln 72 und 73 wieder aus ihrer Endposition heraus zu bewegen.

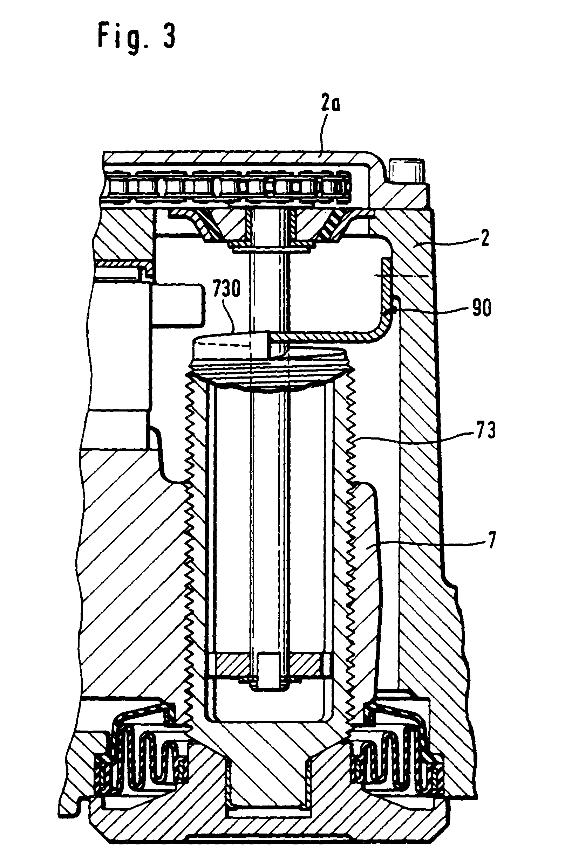

Fig. 3 zeigt anhand eines vergrößerten Teilquerschnitts der Fig. 2 ein erstes Ausführungsbeispiel des erfindungsgemäß in Umfangsrichtung wirkenden Anschlags. Bei dieser wie bei den nachfolgend beschriebenen Ausführungsformen der Erfindung ist der Anschlag bei derjenigen Stellspindel vorgesehen, die keine eigene Nachstelleinrichtung aufweist, sondern lediglich von der Nachstelleinrichtung der gegenüberliegenden Stellspindel über die Synchronisationseinrichtung 75 und die Mitnehmerwelle im Gleichtakt gedreht wird. Der in Umfangsrichtung wirksame Anschlag kann jedoch selbstverständlich alternativ hierzu für die die Nachstelleinrichtung aufweisende Stellspindel vorgesehen werden. Ebenso kann für beide Stellspindeln ein eigener Anschlag vorgesehen werden.

Gemäß Fig. 3 ist die erste Ausführungsform des erfindungsgemäßen Umfangsanschlags im wesentlichen durch ein Winkelblech 90 gebildet, das mit seinem einen Ende an einer Innenwandung des Gehäuses 2 der Zuspannvorrichtung befestigt ist. Der Ort der Befestigung für das Winkelblech 90 ist so gewählt, daß der abgewinkelte, etwa parallel zur Ebene der Bremsscheibe verlaufende Teil des Winkelblechs in etwa über dem eine Hohlzylinder-Stirnseite bildenden, bremsscheibenabgewandten Ende der Stellspindel 73 liegt und etwa bis in die Mitte der Mitnehmerwelle reicht. Wie aus Fig. 3 zu erkennen ist, ist diese Hohlzylinder-Stirnsseite der Stellspindel als eine in Axialrichtung schiefe Ebene 730 ausgebildet, so daß durch den Übergang vom Anfangs- zum Endpunkt der schiefen Ebene 730 eine in Umfangsrichtung wirksame Anschlagfläche gebildet wird, welche die Drehung der Stellspindel 73 hemmt, sobald sie die Stirnfläche des Winkelblechs 90 berührt. Selbstverständlich ist es auch möglich, an dieser Hohlzylinder-Stirnseite der Stellspindel anstelle der schiefen Ebene 730 einen Vorsprung oder dergleichen auszubilden, der eine geeignete Anschlagfläche bildet.

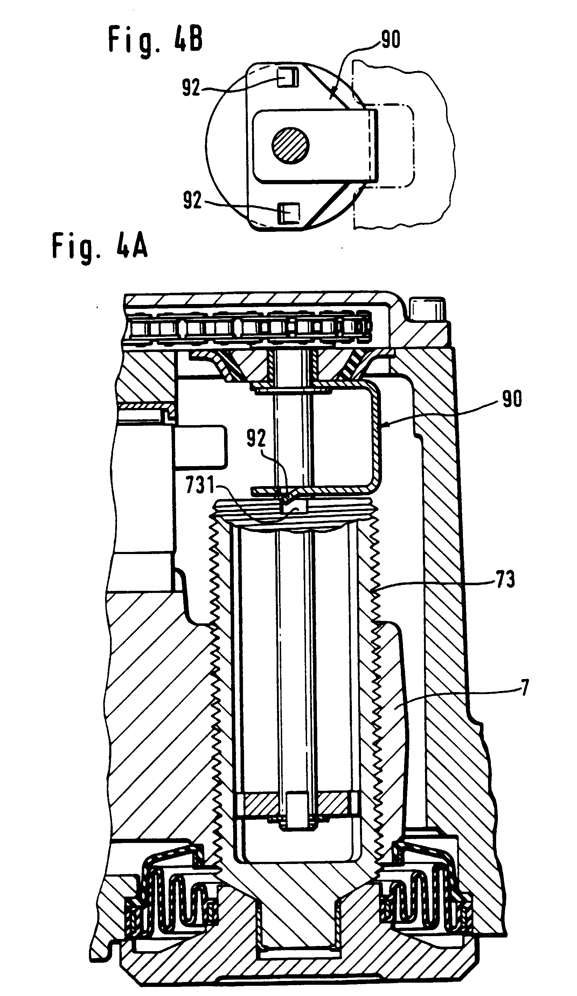

Die in den Figuren 4 bis 7 gezeigten Ausführungsformen des Anschlags basieren auf einer Nut 731, die in der bremsscheibenabgewandten Hohlzylinder-Stirnseite der Stellspindel 73 ausgebildet ist und deren eine Seitenwand eine Anschlagfläche bildet, die mit einem ortsfesten Anschlagkörper in Eingriff gerät. Gemäß Fig. 4 ist dieser Anschlagkörper durch ein im wesentlichen U-förmiges Blechteil 90 gebildet, das, wie insbesondere aus Fig. 4B zu erkennen ist, mit Hilfe von zwei als Lagerung dienenden Bohrungen an der Mitnehmerwelle der Stellspindel 73 gelagert ist. Der der Stellspindel 73 zugewandte Abschnitt des Blechteils 90 ist mindestens so breit, daß an seiner Peripherie mindestens eine nach unten weisende Lasche 92 vorgesehen werden kann, die mit der Seitenwand der Nut 731 in Eingriff gerät. Gemäß Fig. 4B kann auch auf der gegenüberliegenden Seite eine derartige Lasche 92 vorgesehen werden, falls in der Stirnseite der Stellspindel eine weitere Nut 731 ausgebildet wird. Der in radialer Richtung verlaufende Abschnitt des Blechteils 90, der vorzugsweise etwas schmaler ausgebildet ist, steht mit einer im Inneren des Gehäuses geformten Ausnehmung derart in Eingriff, daß eine Drehbewegung des Blechteils 90 im wesentlichen verhindert wird. Infolgedessen kann die auf die Lasche(n) ausgeübte Umfangskraft aufgenommen werden, so daß ein Weiterdrehen der Stellspindel 73 verhindert wird. Die axiale Lage des U-förmigen Blechteils 90 kann beispielsweise mittels eines nicht näher gezeigten Stellkörpers in Form eines Sprengrings oder dergleichen fixiert werden.

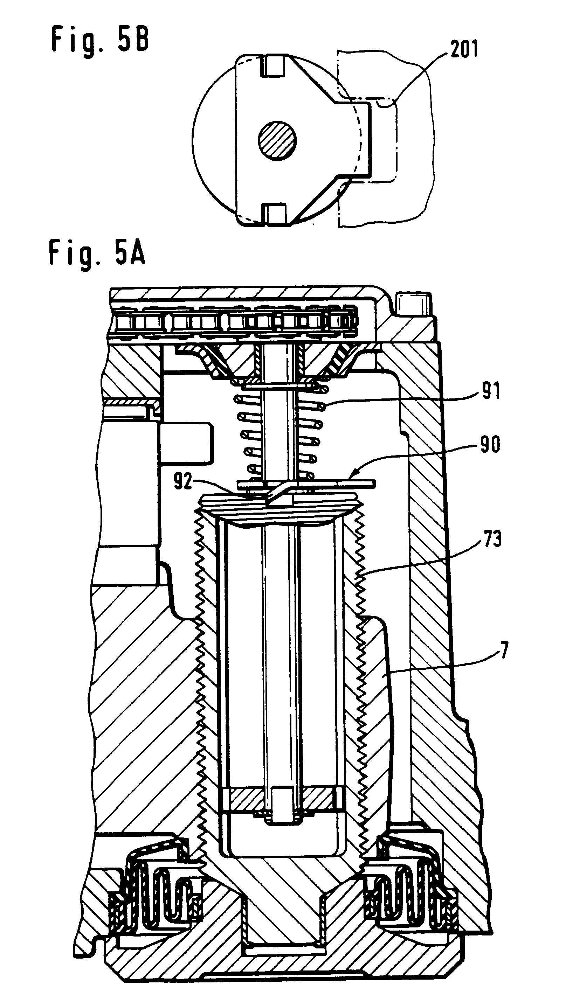

In den Figuren 5A und 5B ist eine Variante des vorstehend erläuterten Umfangsanschlags gezeigt. Dieser besteht im wesentlichen aus einem Blechteil 90 mit der in der Fig. 5B zu erkennenden Gestaltung, bei dem auf beiden Seiten einer Bohrung, die zur Lagerung auf der Mitnehmerwelle dient, jeweils eine nach unten weisende Lasche 92 ausgebildet ist und ein in etwa rechtwinkliger Vorsprung in eine entsprechende Ausnehmung 201 der Innenwandung des Gehäuses 2 eingreift. Dieses Blechteil 90 liegt auf einem Sprengring oder dergleichen auf und wird von einer Spiralfeder 91, die sich am oberen Gehäuseende abstützt, elastisch gegen den Sprengring vorgespannt. Hierdurch wird erreicht, daß das Einwirken von Axialkräften auf die Stellspindel noch sicherer verhindert werden kann. Insbesondere ist es aufgrund der axialen Vorspannung nicht erforderlich, die Lage der Nut exakt an die Lage der Lasche(n) anzupassen, so daß sich die Montage entsprechend einfacher gestaltet.

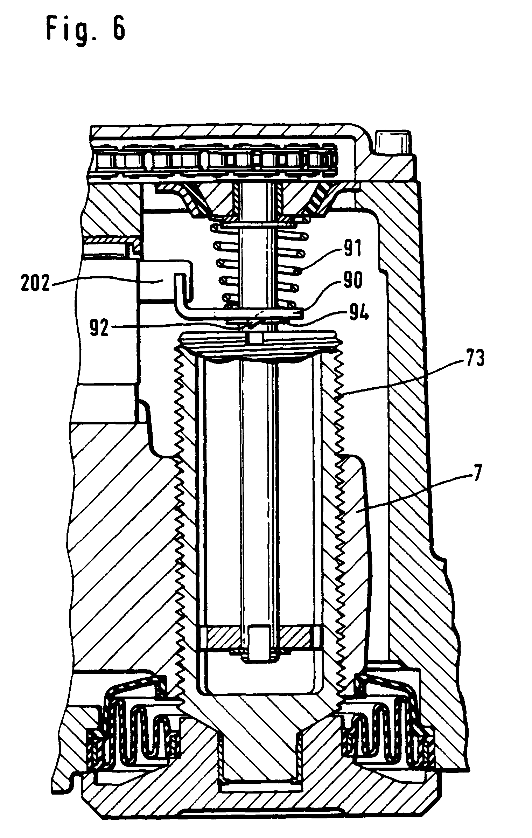

Bei der in Fig. 6 gezeigten Variante dieser Ausführungsform entspricht ein Blechteil 90 weitgehend dem in Fig. 5 gezeigten Blechteil. Demzufolge weist dieses Blechteil 90 ebenfalls mindestens eine nach unten zeigende Lasche 92 auf und stützt sich in axialer Richtung unter der Vorspannung einer Spiralfeder 91 gegen einen Sprengring 94 ab. Die drehfeste Abstützung des Blechteils 90 erfolgt jedoch im Gegensatz zu der vorstehend beschriebenen Variante nicht durch einen in eine Ausnehmung eingreifenden Vorsprung, sondern vielmehr durch einen abgewinkelten Blechabschnitt, der an einem Vorsprung 202 des Gehäuses anliegt.

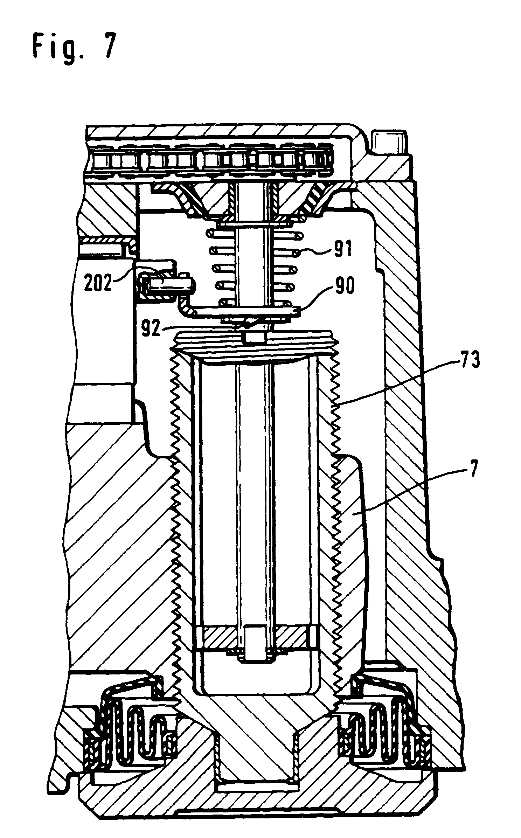

Bei der in Fig. 7 dargestellten Abwandlung dieser Variante des Anschlags ist der abgewinkelte Abschnitt des Blechteils 90 mit dem Vorsprung 202 des Gehäuses mittels eines Stifts befestigt. Selbstverständlich ist jede andere Befestigung verwendbar, die eine leichte Montage unter Ausgleich von Herstellungsungenauigkeiten in radialer Richtung der Stellspindel ermöglicht.

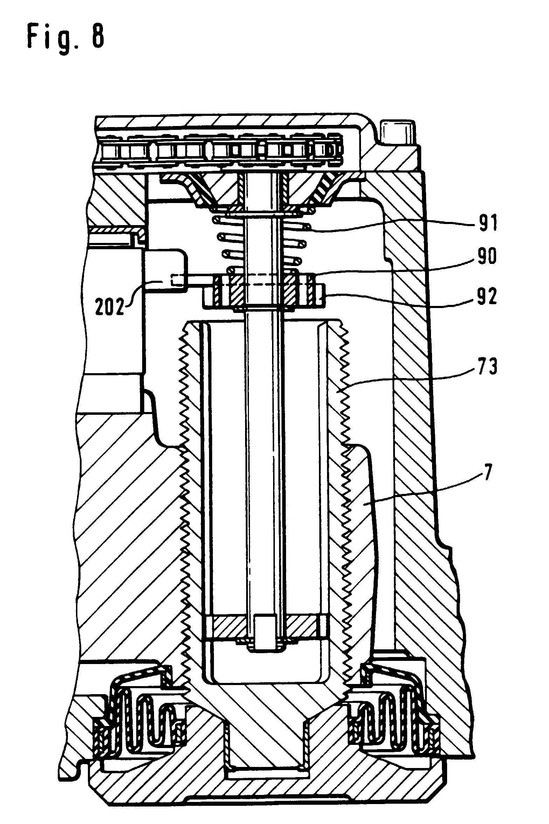

Die Figuren 8 bis 10 zeigen weitere Ausführungsbeispiele des erfindungsgemäßen Umfangsanschlags, bei denen die stellspindelseitige Anschlagfläche durch die in jeder Stellspindel für deren Nachstellung ohnehin vorhandene Axialverzahnung gebildet ist. Diese Ausführungsbeispiele haben daher den Vorteil, daß für die Stellspindel keine zusätzlichen Bearbeitungsvorgänge erforderlich sind.

Bei der in Fig. 8 gezeigten Ausführungsform eines für einen Eingriff in die Axialverzahnung der Stellspindel geeigneten Anschlagkörpers stützt sich ein im wesentlichen ringförmiges Element 90 unter der elastischen Vorspannung einer Spiralfeder 91 an einem Sprengring ab. Am Außenumfang des ringförmigen Elements 90 ist mindestens ein Vorsprung 92 ausgebildet, der so geformt und dessen Entfernung zum Drehpunkt der Mitnehmerwelle so gewählt ist, daß er innerhalb einer jeweiligen Axialverzahnung in axialer Richtung gleiten kann. Die drehfeste Abstützung des ringförmigen Elements 90 erfolgt wie bei der in der Fig. 6 gezeigten Ausführungsform durch ein auskragendes Teil, das sich in Umfangsrichtung gegen einen entsprechenden Vorsprung 202 des Gehäuses abstützt. Selbstverständlich kann auch eine andere drehfeste Abstützung des ringförmigen Elements 90 vorgesehen werden. Falls der Vorsprung 92 beim Zurückdrehen der Stellspindel zunächst einen Zwischenbereich der Axialverzahnung erfaßt, so ermöglicht die Spiralfeder 91 zumindest solange eine axiale Verschiebung des ringförmigen Teils 90, bis der Vorsprung 92 in die nächstgelegene Verzahnung eindringt und spätestens dann die Drehbewegung der Stellspindel 73 beendet.

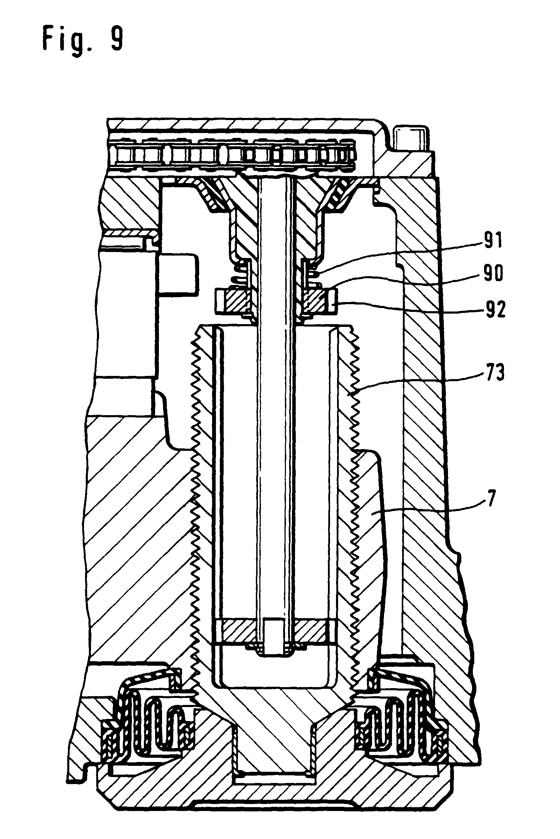

Bei der in Fig. 9 gezeigten Variante dieses Ausführungsbeispiels ist das ringförmige Element 90 am Außenuzfang eines Lagers der Mitnehmerwelle befestigt, wobei die drehfeste Abstützung durch eine Axialnut in der zentralen Bohrung des ringförmigen Elements 90 erfolgt, die in einen entsprechenden Axialvorsprung am Außenumfang des Lagers der Mitnehmerwelle eingreift. Hierdurch ist die axiale Verschiebbarkeit des ringförmigen Elements 90 entgegen der Vorspannung der Spiralfeder 91 gewährleistet.

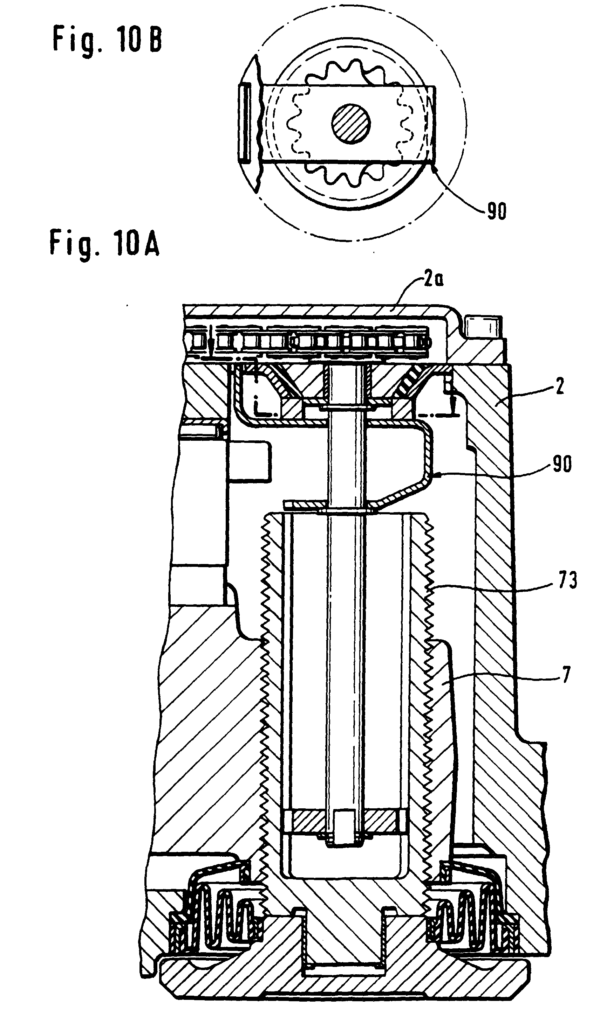

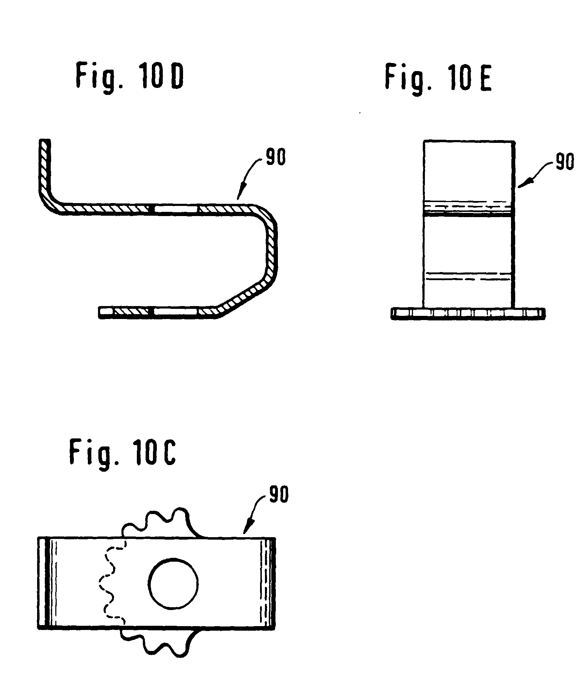

Die Figuren 10A bis 10E zeigen eine weitere Variante dieses Ausführungsbeispiels. Diese Ausführungsform eines auf die Axialverzahnung der Stellspindel einwirkenden Anschlagkörpers 90 zeichnet sich dadurch aus, daß die Herstellung des Anschlagkörpers 90 äußerst preisgünstig und auf einfache Weise durch Stanzen eines entsprechenden Blechteils erfolgen kann, das anschließend entsprechend der Darstellungen in den Figuren 10C bis 10E gebogen wird. Die erforderliche geringfügige Verschiebbarkeit in axialer Richtung wird hierbei durch den U-förmig auskragenden Abschnitt gewährleistet, durch den eine elastische Verformbarkeit in axialer Richtung gegeben ist. Wie insbesondere aus der Darstellung der Fig. 10C gut zu erkennen ist, ist das stellspindelseitige Ende des Anschlagkörpers 90 bei diesem Ausführungsbeispiel mit einer Außenverzahnung versehen, deren Kontur an die Innenverzahnung der Stellspindel 73 angepaßt ist und eine Mehrzahl von Zähnen aufweist. Die Anzahl der Zähne dieser Außenverzahnung kann selbstverständlich geändert werden. Aus der Darstellung der Fig. 10B geht hervor, daß die drehfeste Abstützung des Anschlagkörpers 90 auf ebenso einfache Weise durch einen gehäuseseitigen Schlitz erfolgt, in den das Ende des nach oben weisenden Abschnitts des Anschlagkörpers 90 eingreift.

Obgleich der erfindungsgemäße, in Umfangsrichtung wirksame Anschlag bei den gezeigten Ausführungsbeispielen auf das bremsscheibenabgewandte Ende der Stellspindel einwirkt, ist es gleichwohl auch möglich, das breasscheibenseitige Ende oder den in einer gewissen Entfernung hierzu befindlichen Umfangsbereich der Stellspindel so umzuformen, daß eine entsprechende Sperrwirkung erzielbar ist.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; der in Umfangsrichtung wirksame Anschlag kann vielmehr bei allen Stellelementen verwendet werden, deren axiale Relativlage zur Bremsscheibe mit zunehmendem Belagverschleiß von einer geeigneten Antriebseinrichtung verändert wird.

Bezüglich noch weiterer, nicht näher erläuterter Merkmale und Wirkungen der Erfindung wird ausdrücklich auf die Figuren verwiesen.

## Patentansprüche

1. Druckluftbetätigte Scheibenbremse mit einem eine Bremsscheibe *(1)* umfassenden Bremssattel *(2)*, auf dessen einer Seite eine Zuspannvorrichtung *(3)* angeordnet ist, die über mindestens eine Stellspindel *(72, 73)* und ein an derem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt, wobei eine mit der Stellspindel *(72, 73)* drehfest gekoppelte Nachstelleinrichtung *(74)* das sich infolge Belagverachleiß ändernde Lüftspiel konstant hält und mit einer extern betätigbaren Drehantriebseinrichtung gekoppelt ist, mittels der die Stellspindel *(72, 73)* in ihre Ausgangslage zurückbringbar ist,
***gekennzeichnet durch***
einen Anschlag (90, 92), der in der Ausgangslage der Stellspindel *(72,* 73) im wesentlichen in Umfangswirkunq auf diese einwirkt.

2. Druckluftbetätigte Scheibenbremse nach Anspruch 1, ***dadurch gekennzeichnet,*** daß ein Ende der Stellspindel *(72,* 73) in Rückdrehrichtung mit einem drehfesten Anschlagkörper *(90, 92)* zusammenwirkt, der außermittig an der Stellspindel *(72, 73)* angreift und eine die Drehbewegung der Stellspindel *(72, 73)* hemmende Stützkraft im wesentlichen parallel zur Radialebene aufbringt.

3. Druckluftbetätigte Scheibenbremse nach Anspruch 1, ***dadurch gekennzeichnet,*** daß an einem Ende der Stellspindel *(72, 73)* mindestens eine außermittig angeordnete Anschlagfläche *(731)* ausgebildet ist, die im wesentlichen in Radialrichtung unter einem vorgegebenen Winkel zur Radialebene verläuft und mit einem drehfesten Anschlagkörper *(90, 92)* in Eingriff gerät.

4. Druckluftbetätigte Scheibenbremse nach Anspruch 3, ***dadurch gekennzeichnet,*** daß der vorgegebene Winkel zur Radialebene ca. 90 Grad beträgt.

5. Druckluftbetätigte Scheibenbremse nach einem der Ansprüche 1 bis 4, ***dadurch gekennzeichnet,*** daß das genannte Ende der Stellspindel *(72, 73)* ihr bremsscheibenabgewandtes Ende ist.

6. Druckluftbetätigte Scheibenbremse nach Anspruch 3 oder 4, ***dadurch gekennzeichnet,*** daß eine bremsscheibenabgewandte Hohlzylinder-Stirnseite der Stellspindel *(72, 73)* als eine in Axialrichtung schiefe Ebene *(730)* ausgebildet ist, deren Übergang vom Anfangs- zum Endpunkt die Anschlagfläche bildet (Fig.3).

7. Druckluftbetätigte Scheibenbremse nach Anspruch 3 oder 4, ***dadurch gekennzeichnet,*** daß eine Seitenwand einer außermittig am bremsscheibenabgewandten Ende der Stellspindel *(72, 73)* radial ausgebildeten Nut *(731)* die Anschlagfläche bildet (Fig.4 bis *7*).

8. Druckluftbetätigte Scheibenbremse nach Anspruch 3 oder 4, ***dadurch gekennzeichnet,*** daß eine Seitenwand eines außermittig am bremsscheibenabgewandten Ende der Stellspindel *(72, 73)* radial ausgebildeten Vorsprungs die Anschlagfläche bildet.

9. Druckluftbetätigte Scheibenbremse nach Anspruch 3 oder 4, ***dadurch gekennzeichnet,*** daß die Anschlagfläche durch mindestens einen der Zähne einer im Inneren der Stellspindel *(72, 73)* ausgebildeten Axialverzahnung gebildet ist (Fig.8 bis 10).

10. Druckluftbetätigte Scheibenbremse nach einem der Ansprüche 2 bis 9, ***dadurch gekennzeichnet,*** daß der drehfeste Anschlagkörper durch ein Winkelblech *(90)* gebildet ist, das mit einem Ende am Gehäuse der Zuspannvorrichtung (3) befestigt ist (Fig.3).

11. Druckluftbetätigte Scheibenbremse nach einem der Ansprüche 2 bis 9, ***dadurch gekennzeichnet,*** daß der drehfeste Anschlagkörper *(92)* an einem an einer Mitnehmerwelle der Stellspindel *(72, 73)* gelagerten Teil *(92)* ausgebildet ist, das sich an einem Gehäusevorsprung *(202)* oder einer Gehäuseausnehmung *(201)* drehfest abstützt (Fig.4bis 10).

12. Druckluftbetätigte Scheibenbremse nach einem der Ansprüche 2 bis 9, ***dadurch gekenneichnet,*** daß der Anschlagkörper *(92)* als radial nach außen weisender Vorsprung *(92)* am Außenumfang eines an einer Mitnehmerwelle der Stellspindel *(72, 73)* drehfest gelagerten ringförmigen Elements *(90)* ausgebildet ist (Fig.9).

13. Druckluftbetätigte Scheibenbremse nach einem der Ansprüche 2 bis 12, ***dadurch gekennzeichnet,*** daß der Anschlagkörper *(90, 92)* in Axialrichtung verschiebbar gelagert ist und daß ein Federelement *(91)* vorgesehen ist, das den Anschlagkörper *(92)* in Richtung zur Bremsscheibe *(1)* hin gegen einen Stellkörper *(94)* vorspannt (Fig.5 bis 9).

14. Druckluftbetätigte Scheibenbremse nach einem der Ansprüche 2 bis 12, ***dadurch gekennzeichnet,*** daß der Anschlagkörper *(90, 92)* in Axialrichtung geringfügig elastisch verformbar ist (Fig.4, 10).

## Claims

1. Compressed-air actuated disk brake comprising a caliper *(2)* which reaches around a brake disk *(1)* and on one side of which an application device *(3)* is arranged which, by way of at least one actuating spindle *(72, 73)* and a pressure member *(70, 71)* mounted on the end thereof facing said brake disk, acts upon a brake pad *(10)* which, on the application side, is disposed in said caliper *(2)* to be displaceable with respect to said brake disk *(1)*, an adjusting means *(74)* which is coupled in a rotationally fixed manner to said actuating spindle *(72, 73)* and which maintains the clearance varying due to lining wear essentially constant being coupled with an externally operable rotational drive means whereby said actuating spindle *(72, 73)* may be returned to its home position,
*characterized by*
a stop *(90, 92)* which essentially acts circumferentially on said actuating spindle *(72, 73)* when the latter is in its home position.

2. Compressed-air actuated disk brake according to claim 1, *characterized in that* one end of said actuating spindle *(72, 73)* cooperates in the direction of its return rotation with a rotationally fixed stop member *(90, 92)* which eccentrically acts on said actuating spindle *(72, 73)* and applies a supporting force, which inhibits the rotational movement of said actuating spindle *(72, 73)*, in a direction essentially parallel to the radial plane.

3. Compressed-air actuated disk brake according to claim 1, *characterized in that* at one end of said actuating spindle *(72, 73)*, at least one eccentrically arranged stop surface *(731)* is formed which extends essentially in the radial direction at a predetermined angle with the radial plane and engages a rotationally fixed stop member *(90, 92).*

4. Compressed-air actuated disk brake according to claim *3, characterized in that* the predetermined angle with the radial plane is approximately 90 degrees.

5. Compressed-air actuated disk brake according to one of claims 1 to 4, *characterized in that* the said end of said actuating spindle *(72, 73)* is the one end thereof which faces away from said brake disk.

6. Compressed-air actuated disk brake according to claim 3 or 4, *characterized in that* a front side of said actuating spindle *(72, 73)* which has the shape of a hollow cylinder and faces away from said brake disk is formed as a plane *(730)* inclined in the axial direction whose transition from the starting point to the end point represents said stop surface (Fig.3).

7. Compressed-air actuated disk brake according to claim 3 or 4, *characterized in that* a side wall of a radial groove *(731)* which is eccentrically formed at the end of said actuating spindle *(72, 73)* which faces away from said brake disk represents said stop surface (Figs.4 to 7).

8. Compressed-air actuated disk brake according to claim 3 or 4, *characterized in that* a side wall of a radial projection eccentrically formed at the end of said actuating spindle *(72, 73)* which faces away from said brake disk represents said stop surface.

9. Compressed-air actuated disk brake according to claim 3 or 4, *characterized in that* said stop surface is represented by at least one of the teeth of axially aligned teeth formed inside said actuating spindle *(72, 73)* (Figs. 8 to 10).

10. Compressed-air actuated disk brake according to one of claims 2 to 9, *characterized in that* said rotationally fixed stop member is formed by an angular metal sheet *(90)*, one end of which is fastened to the housing of said application device *(3)* (Fig.3).

11. Compressed-air actuated disk brake according to one of claims 2 to 9, *characterized in that* said rotationally fixed stop member *(92)* is formed on a member *(92)* which is mounted on a driving shaft of said actuating spindle *(72, 73)* and supported in a rotationally fixed manner on a housing projection *(202)* or on a housing recess *(201)* (Figs. 4 to 10).

12. Compressed-air actuated disk brake according to one of claims 2 to 9, *characterized in that* said stop member *(92)* has the form of a projection *(92)* extending in a radially external direction on the outer circumference of an annular element *(90)* which is rotationally fixed on a driving shaft of said actuating spindle *(72, 73)* (Fig.9).

13. Compressed-air actuated disk brake according to one of claims 2 to 12, *characterized in that* said stop member *(90, 92)* is mounted in an axially displaceable manner, and that a spring element *(91)* is provided which biases said stop member *(92)* against an actuating member *(94)* in the direction towards said brake disk *(1)* (Figs.5 to 9).

14. Compressed-air actuated disk brake according to one of claims 2 to 12, *characterized in that* said stop member *(90, 92)* is slightly elastically deformable in the axial direction (Figs.4,10).

## Revendications

1. Frein à disque à air comprimé comportant un étrier de frein (2) cernant un disque de frein (1), sur l'un côté duquel un dispositif de serrage (3) est disposé, qui par l'intermédiaire d'au moins une vis de réglage (72, 73) et une pièce de pression (70, 71) logée sur l'extrémité côté disque de frein de la vis agit sur une mâchoire de frein (10) logée de manière à pouvoir se déplacer par rapport au disque de frein (1) dans l'étrier de frein (2) côté serrage, un dispositif de rattrapage (74) raccordé de manière solidaire en rotation à la vis de serrage (72, 73) maintenant constant le jeu changeant en conséquence de l'usure des garnitures et étant raccordé à un dispositif d'entraînement rotatif qui peut être actionné de l'extérieur, moyennant lequel la vis de réglage (72, 73) peut être ramenée dans sa position de départ,
caractérisé par
une butée (90, 92) qui dans la position de départ de la vis de réglage (72, 73) agit substantiellement avec un effet périphérique.

2. Frein à disque à air comprimé selon la revendication 1, caractérisé en ce qu'une extrémité de la vis de réglage (72, 73) coopère en direction de rotation en sens inverse avec un corps de butée solidaire en rotation (90, 92) qui agit sur la vis de réglage (72, 73) de manière excentrique et produit une force d'assistance freinant le mouvement rotatif de la vis de réglage (72, 73) essentiellement dans un plan parallèle au plan radial.

3. Frein à disque à air comprimé selon la revendication 1, caractérisé en ce que sur une extrémité de la vis de réglage (72, 73) au moins une surface de butée (731) est formée de manière excentrique qui s'étend essentiellement en direction radiale sous un angle prescrit par rapport au plan radial et qui entre en prise avec un corps de butée (90,92) solidaire en rotation.

4. Frein à disque à air comprimé selon la revendication 3, caractérisé en ce que l'angle prescrit par rapport au plan radial est environ de 90 degrés.

5. Frein à disque à air comprimé selon l'une quelconque des revendications 1 à 4, caractérisé en ce que ladite extrémité de la vis de réglage (72, 73) est l'extrémité détournée du disque de frein.

6. Frein à disque à air comprimé selon les revendications 3 ou 4, caractérisé en ce qu'une face frontale de cylindre creux de la vis de réglage (72, 73) détournée du disque de frein est formée en direction axiale comme plan incliné (730) dont la transition du point de départ au point d'aboutissement forme la surface de butée (Figure 3).

7. Frein à disque à air comprimé selon les revendications 3 ou 4, caractérisé en ce que la surface de butée (Figure 4 à 7) est constituée par une paroi latérale d'une rainure (731) excentrique formée radialement sur l'extrémité détournée du disque de frein de la vis de réglage (72, 73).

8. Frein à disque à air comprimé selon les revendications 3 à 4, caractérisé en ce que la surface de butée est formée par une paroi latérale d'une projection excentrique formée radialement sur l'extrémité détournée du disque de frein de la vis de réglage (72, 73).

9. Frein à disque à air comprimé selon les revendications 3 à 4, caractérisé en ce que la surface de butée est formée par au moins une des dents d'une denture axiale formée à l'intérieur de la vis de réglage (72, 73) (Figures 8 à 10).

10. Frein à disque à air comprimé selon l'une quelconque des revendications 2 à 9, caractérisé en ce que le corps de butée solidaire en rotation est formé par une tôle angulaire (90) qui par une extrémité est fixée au boîtier du dispositif de serrage (3) (Figure 3).

11. Frein à disque à air comprimé selon l'une quelconque des revendications 2 à 9, caractérisé en ce que le corps de butée (92) solidaire en rotation est formé sur une pièce (92) logée sur l'arbre d'entraînement de la vis de réglage (72, 73), pièce solidaire en rotation qui repose contre une projection du boîtier (202) ou une échancrure du boîtier (201) (Figures 4 à 10).

12. Frein à disque à air comprimé selon l'une quelconque des revendications 2 à 9, caractérisé en ce que le corps de butée (92) est formé comme projection radiale dirigée vers l'extérieur (92) sur la circonférence extérieure d'un élément annulaire (90) logé de manière solidaire en rotation sur un arbre d'entraînement de la vis de réglage (72, 73) (Figure 9).

13. Frein à disque à air comprimé selon l'une quelconque des revendications 2 à 12, caractérisé en ce que le corps de butée (90, 92) est logé de manière à pouvoir se déplacer en direction radiale et qu'un élément à ressort (91) est prévu qui précontraint le corps de butée (92) en direction du frein à disque (1) contre un élément de commande (94) (Figures 5 à 9).

14. Frein à disque à air comprimé selon l'une quelconque des revendications 2 à 12, caractérisé en ce que le corps de butée (90, 92) est élastique en sens axial, pouvant être légèrement déformé (Figure 4, 10).
